# EUROPEAN PATENT APPLICATION

(11) **EP 1 962 014 A1**
(43) Date of publication of application: **27.08.2008**
(21) Application number: 08150251.0
(22) Date of filing: 15.01.2008
(51) Int. Cl.: F21V 5/04, F21V 13/04, F21V 17/16, H01L 33/00

(54) **Lighting apparatus using filter and condenser for LED illumination**

(30) Priority: 20.02.2007 KR 20070017123; 10.10.2007 KR 20070101931
(71) Applicant: Sekonix Co., Ltd., Dongducheon-si, Gyeonggi-do 483-100 (KR)
(72) Inventor: Kim, Jin-Ho, Gyeonggi-do 463-927, Seongnam-si (KR); Hwang, Shung-Hoon, Dongdaemun 130-767, Seoul (KR); Lee, Hee-Joong, 143-754, Seoul (KR); Jeon, Sang-Cheon, Gyeonggi-do 448-802, Yongin-si (KR); Choi, Mu-Gile, Do-Bong Gu 132-044, Seoul (KR)
(74) Representative: Leman Consulting S.A.

(57) **Abstract**

There is provided a lighting apparatus using a filter (10) and a condenser (20) for LED illumination in which an optical filter to obtain diverse optical patterns as a user desires is connected to a condenser for LED illumination without using any additional device.

The lighting apparatus in which the optical filter can be exchanged comprises: a LED for generating a light source for illumination, a condenser for concentrating the light source generated from the LED, and an optical filter connected to the condenser, for providing an optical pattern, wherein the optical filter is connected to the condenser so as to be attachable to or detachable from the condenser.

## Description

### CROSS-REFERENCE TO RELATED APPLICATION

This application claims the benefit of Korean Patent Application No. 2007-0101931, filed October 10, 2007, the disclosure of which is hereby incorporated herein by reference in its entirety.

### BACKGROUND OF THE INVENTION

### 1. Technical Field

The present invention relates to a lighting apparatus using a filter and a condenser for LED illumination and, more particularly, to a lighting apparatus using a filter and a condenser for LED illumination in which an optical filter to obtain diverse optical patterns as a user desires is connected to a condenser for LED illumination without using any additional device.

### 2. Discussion of Related Art

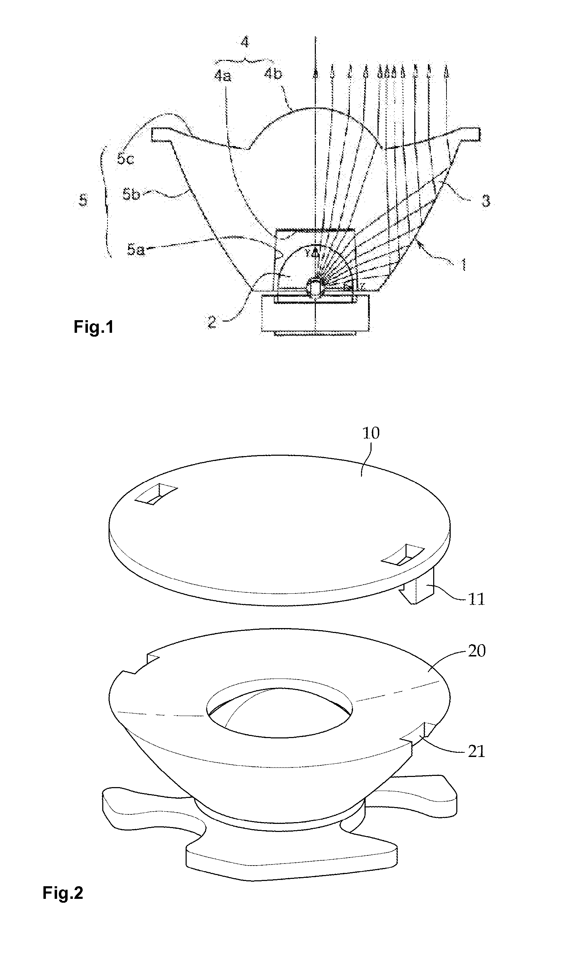

Generally, a LED has a very great radiation angle of light being illuminated due to its own properties. Thus, LEDs have been mainly used to illuminate a large area. A condenser for the LED, which had been invented by the present applicant, was granted in Korean Patent Registration No. 10-0756174. FIG. 1 is a sectional view of the aforementioned conventional condenser for the LED. In FIG. 1, the condenser comprises a first lens unit 4 and a second lens unit 5 surrounding the first lens unit 4 in a transparent body 3. The first lens unit 4 is formed of first and second aspheric lenses 4a and 4b positioned at planes of symmetry. The first and second aspheric lenses 4a and 4b are convex lenses and are different from each other in size. The second lens unit 5 is formed of an incident surface 5a, a reflective surface 5b, and a light-emitting surface 5c. The incident surface 5a protrudes from an outer circumferential edge of the second aspheric lens 4b. A LED 2 is inserted into the incident surface 5a. Light radiated from the LED 2 is incident on the incident surface 5a and is refracted. The reflective surface 5b extendedly slants from the incident surface 5a to the second aspheric lens 4b and is formed in a curved convex surface which becomes progressively wider from the incident surface 5a towards the second aspheric lens 4b. The reflective surface 5b totally reflects the light of the LED 2. The light-emitting surface 5c extendedly slants from the reflective surface 5b to the first aspheric lens 4a and is formed in a curved concave surface from the reflective surface 5b to the first aspheric lens 4a. The light-emitting surface 5c refracts the light of the LED 2 to be parallel to an optical axis, to be emitted.

However, when an optical filter to obtain diverse optical patterns needs to be attached to a lighting apparatus using the condenser for LED illumination, there are many difficulties in connecting the optical filter to the condenser because the structure of the condenser has a round shape. Moreover, when a user desires to use diverse patterns, (s)he needs to change the optical filter. In this case, an additional mechanical unit for connecting the optical filter to the condenser is needed.

### SUMMARY OF THE INVENTION

Therefore, the present invention is directed to provide a structure in which an optical filter to obtain diverse optical patterns as a user desires can be connected to a condenser for LED illumination, without any additional device.

In accordance with an embodiment of the present invention, there is provided a lighting apparatus using a filter and a condenser for LED illumination, comprising: a LED for generating a light source for illumination, a condenser for concentrating the light source generated from the LED, and an optical filter to be connected to the condenser, for providing an optical pattern, wherein the optical filter is connected to the condenser so as to be attachable to or detachable from the condenser.

Preferably, a connecting unit for connecting the optical filter to the condenser may be a hook formed to be connected to each of the optical filter and the condenser.

### BRIEF DESCRIPTION OF THE DRAWINGS

The above and other features and advantages of the present invention will become more apparent to those of ordinary skill in the art by describing in detail preferred embodiments thereof with reference to the attached drawings in which:
FIG. 1 is a sectional view of a conventional condenser for a LED;
FIG. 2 is an exploded view of a lighting apparatus according to the present invention;
FIG. 3 is a sectional view of an optical filter connected to a condenser in the lighting apparatus according to the present invention;
FIG. 4 is a sectional view of an optical filter for an elliptical beam lens, connected to the condenser in the lighting apparatus according to the present invention;

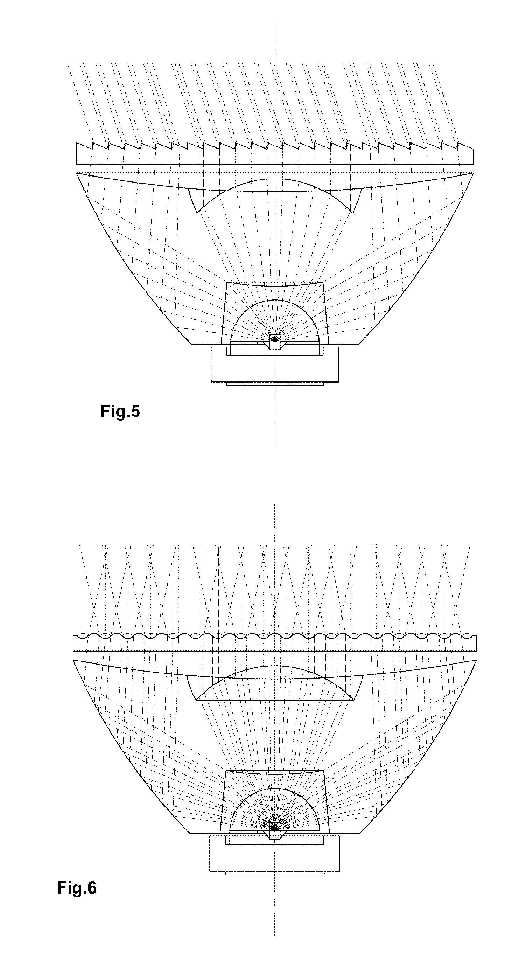

FIG. 5 is a sectional view of an optical filter for a tilt beam lens, connected to a condenser in the lighting apparatus according to the present invention;
FIG. 6 is a sectional view of an optical filter for a medium beam lens, connected to a condenser in the lighting apparatus according to the present invention;

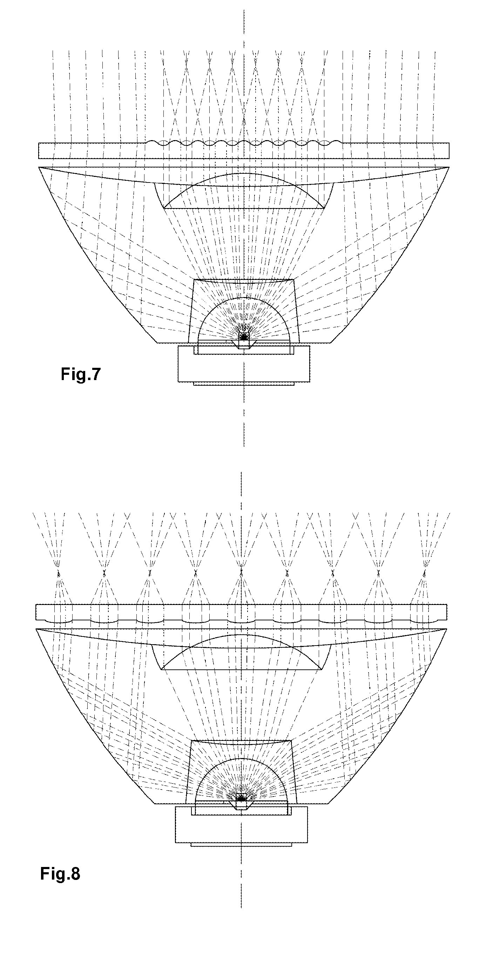

FIG. 7 is a sectional view of an optical filter for a narrow beam lens, connected to a condenser in the lighting apparatus according to the present invention;
FIG. 8 is a sectional view of an optical filter for a wide beam lens, connected to a condenser in the lighting apparatus according to the present invention;

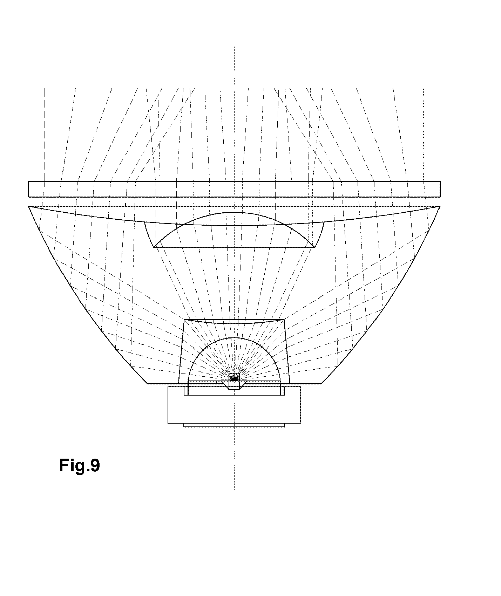

FIG. 9 is a sectional view of an optical filter for a fog beam lens, connected to a condenser in the lighting apparatus according to the present invention.

### DETAILED DESCRIPTION OF THE INVENTION

The present invention will now be described more fully hereinafter with reference to the accompanying drawings, in which preferred embodiments of the invention are shown. This invention may, however, be embodied in different forms and should not be construed as limited to the embodiments set forth herein.

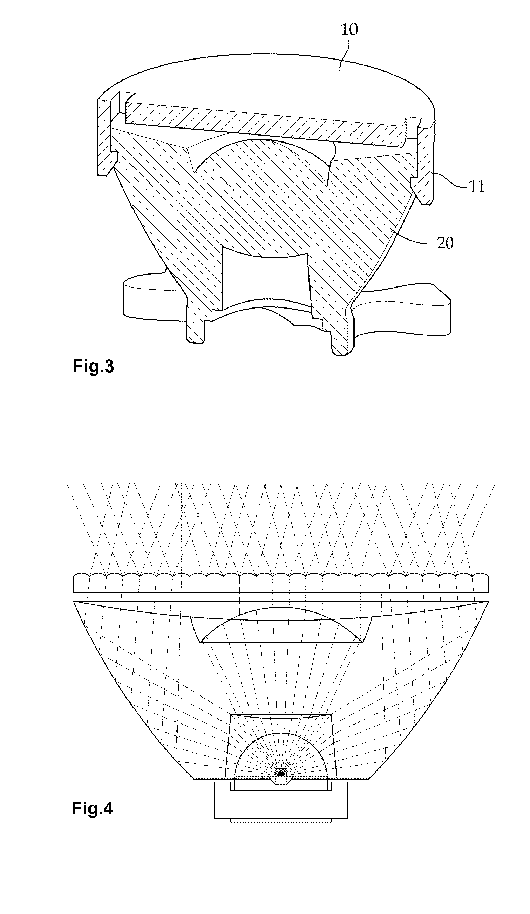

As illustrated in FIGS. 2 and 3, a lighting apparatus using a filter and a condenser for LED illumination according to the present invention is characterized by a LED for generating a light source required for illumination, a condenser 20 for concentrating the light source generated from the LED, and an optical filter 10 for providing diverse optical patterns, wherein the optical filter 10 is connected to the condenser 20 so as to be attachable to or detachable from the condenser 20.

A connecting unit for connecting the optical filter 10 to the condenser 20 is a hook device formed to be connected to each of the optical filter 10 and the condenser 20. The hook device includes a connection opening 21 formed at both ends of the condenser 20, and a connection hook 11 formed at both lower ends of the optical filter 10, to be connected to the connection opening 21 formed at the condenser 20.

The filter connected to the upper part of the condenser has the function of changing a direction and a pattern of the light reflected from the condenser. There are used various optical filters, such as, an optical filter for an elliptical beam lens, an optical filter for a tilt beam lens, an optical filter for a medium beam lens, an optical filter for a narrow beam lens, an optical filter for a wide beam lens, an optical filter for a fog beam lens and others.

Specifically, the optical filter for the elliptical beam lens changes a round-shape optical pattern lengthwise. The optical filter for the tilt beam lens tilts the round-shape optical pattern by about 20°. The optical filter for the medium beam lens changes the field of view of about 10° to about 20°. The optical filter for the narrow beam lens changes the field of view of about 10° to about 15°. The optical filter for the wide beam lens changes the field of view of about 10° to about 30°. The optical filter for the fog beam lens removes an edge of the optical pattern to be changed in a gentle pattern.

The invention has been described using preferred exemplary embodiments. However, it is to be understood that the scope of the invention is not limited to the disclosed embodiments. On the contrary, the scope of the invention is intended to include various modifications and alternative arrangements within the capabilities of persons skilled in the art using presently known or future technologies and equivalents. The scope of the claims, therefore, should be accorded the broadest interpretation so as to encompass all such modifications and similar arrangements.

## Claims

1. A lighting apparatus using a filter and a condenser for LED illumination, comprising:
a LED for generating a light source required for illumination;
a condenser for concentrating the light source generated from the LED; and
an optical filter connected to the condenser, for providing an optical pattern, and
wherein the optical filter is connected to the condenser so as to be attachable to or detachable from the condenser.

2. The lighting apparatus according to claim 1, wherein a connecting unit for connecting the optical filter to the condenser is a hook device formed to be connected to each of the optical filter and the condenser.

3. The lighting apparatus according to claim 2, wherein the hook device comprises: a connection opening formed at both ends of the condenser, and a connection hook formed at both lower ends of the optical filter, to be connected to the connection opening formed at the condenser.

4. The lighting apparatus according to claim 1, wherein the optical filter changes a direction and a pattern of light being reflected in the condenser.
